# EUROPEAN PATENT SPECIFICATION

(11) **EP 3 662 385 B1**
(45) Date of publication and mention of the grant of the patent: **19.01.2022**
(21) Application number: 18749348.1
(22) Date of filing: 31.07.2018
(51) Int. Cl.: G06F 16/00, G06F 21/56, G06F 21/60, H04L 29/06, G06F 3/06, G06F 21/80

(54) **SECURE STORAGE DEVICE**
VORRICHTUNG FÜR SICHERE SPEICHERUNG
DISPOSITIF DE STOCKAGE SÉCURISÉ

(30) Priority: 04.08.2017 US 201762541505 P; 25.07.2018 US 201816045115
(43) Date of publication of application: 10.06.2020
(73) Proprietor: Bitdefender IPR Management Ltd., 2012 Nicosia (CY)
(72) Inventor: LUKACS, Sandor, 407280 Sat Floresti (RO); TURICU, Dan-Cristian, 430231 Baia Mare (RO)
(74) Representative: Tuluca, F. Doina
(86) International application number: PCT/EP2018/070692
(87) International publication number: WO 2019/025423

(56) References cited:
- EP-A1- 2 596 596
- US-A1- 2013 340 088
- US-A1- 2014 188 803
- US-A1- 2016 070 918

## Description

### RELATED APPLICATIONS

This application claims the benefit of the filing date of U.S. provisional patent application No. 62,541,505, filed on 08/04/2017, entitled "Secure Storage Device".

### BACKGROUND

The invention relates to computer security, and in particular to protecting a computer against malicious software (malware).

Malicious software affects a great number of computer systems worldwide. In its many forms such as computer viruses, worms, rootkits, and spyware, malware presents a serious risk to millions of computer users, making them vulnerable to loss of data and sensitive information, identity theft, and loss of productivity, among others. Ransomware is a particularly dangerous type of malware, that encrypts a set of files found on a storage medium such as a computer's hard drive, and then asks an owner of the files to pay to recover the respective data.

Anti-malware software may be used to detect and/or incapacitate malicious software. However, malware employs various strategies to evade detection. One such strategy involves obfuscation, for instance encrypting the malicious code, or using slightly different code versions on each infected computer (a feature commonly known as polymorphism). Another exemplary detection avoidance method divides malicious activities among a plurality of agents, wherein each agent performs a separate set of actions, that cannot be considered malware-indicative when taken in isolation.

Some anti-malware strategies are directed at protecting the hardware storage devices themselves. In one such example described in US patent application No. 2013/0340088 A1 by Thadikaran *et al.*, a trusted connection may be established between a host and a controller of multiple storage devices. The described solution further uses encrypted communications via the trusted connection to undermine attempts by malware to preserve infected locations on the storage devices. In another example described in US patent application No. 2014/0188803 A1 by James et al., a device may identify newly utilized files stored on the respective device, and a synchronization engine may automatically synchronize these files to one or more additional devices. Another anti-malware strategy described in European patent No. 2596596 by Kalan et al*.* comprises automatically provisioning an appliance to provide security services such as encryption of email and other electronic messaging.

There is therefore a strong interest in developing robust systems and methods for protecting digitally stored data from theft and unauthorized modification, including by malicious software.

### SUMMARY

According to one aspect, a computer system comprises a first hardware processor and a secure storage device, the secure storage device connected to the first hardware processor via a storage interface configured to receive storage access requests formatted according to a storage transmission protocol. The secure storage device comprises a second hardware processor and a non-volatile storage unit. The first hardware processor is configured, in response to detecting a request by software executing on the first hardware processor to store a data packet on the storage unit, to encrypt the data packet. The first hardware processor is further configured, in response to encrypting the data packet, to transmit a true storage access request to the storage interface, the true storage access request comprising the encrypted data packet. The first hardware processor is further configured to generate a dummy storage access request according to the storage transmission protocol, the dummy storage access request comprising at least a part of a cryptographic key, and to transmit the dummy storage access request to the storage interface. The second hardware processor is configured, in response to receiving a communication via the storage interface, to determine whether the communication comprises the dummy storage access request. In response, when the communication comprises the dummy storage access request the second hardware processor is configured to determine the cryptographic key according to the dummy storage access request. The second hardware processor is further configured, in response to receiving the true storage access request, to employ the cryptographic key to decrypt the data packet, and to determine whether the decrypted data packet comprises malicious software.

According to another aspect, a secure storage device comprises a first hardware processor and a non-volatile storage unit, the secure storage device configured to connect to a second hardware processor via a storage interface configured to receive storage access requests formatted according to a storage transmission protocol. The second hardware processor is configured, in response to detecting a request by software executing on the second hardware processor to store a data packet on the storage unit, to encrypt the data packet. The second hardware processor is further configured, in response to encrypting the data packet, to transmit a true storage access request to the storage interface, the true storage access request comprising the encrypted data packet. The second hardware processor is further configured to generate a dummy storage access request according to the storage transmission protocol, the dummy storage access request comprising at least a part of a cryptographic key, and to transmit the dummy storage access request to the storage interface. The first hardware processor is configured, in response to receiving a communication via the storage interface, to determine whether the communication comprises the dummy storage access request. In response, when the communication comprises the dummy storage access request, the first hardware processor is configured to determine the cryptographic key according to the dummy storage access request. The first hardware processor is further configured, in response to receiving the true storage access request, to employ the cryptographic key to decrypt the data packet, and to determine whether the decrypted data packet comprises malicious software.

According to another aspect, a computer security method comprises connecting a secure storage device to a first hardware processor via a storage interface configured to receive storage access requests formatted according to a storage transmission protocol, wherein the secure storage device comprises a second hardware processor and a non-volatile storage unit. The method further comprises, in response to detecting a request by software executing on the first hardware processor to store a data packet on the storage unit, employing the first hardware processor to encrypt the data packet. The method further comprises, in response to encrypting the data packet, employing the first hardware processor to transmit a true storage access request to the storage interface, the true storage access request comprising the encrypted data packet. The method further comprises employing the first hardware processor to generate a dummy storage access request according to the storage transmission protocol, the dummy storage access request comprising at least a part of a cryptographic key, and employing the first hardware processor to transmit the dummy storage access request to the storage interface. The method further comprises, in response to receiving a communication via the storage interface, employing the second hardware processor to determine whether the communication comprises the dummy storage access request. In response, when the communication comprises the dummy storage access request, the method further comprises employing the second hardware processor to employ the cryptographic key to decrypt the data packet; and employing the second hardware processor to determine whether the decrypted data packet comprises malicious software.

### BRIEF DESCRIPTION OF THE DRAWINGS

The foregoing aspects and advantages of the present invention will become better understood upon reading the following detailed description and upon reference to the drawings where:
Fig. 1 illustrates an exemplary hardware configuration of a host system protected from computer security threats according to some embodiments of the present invention.
Fig. **2** shows an exemplary hardware configuration of a secure storage device according to some embodiments of the present invention.
Fig. **3-A** shows exemplary software components executing on a protected host system according to some embodiments of the present invention.
Fig. **3-B** illustrates an alternative set of software components according to some embodiments of the present invention.
Fig. **4** shows exemplary software components executing within the secure storage device according to some embodiments of the present invention.
Fig. **5** shows an exemplary set of steps carried out by the computer security module (CSM) of Figs. **3-A-B** according to some embodiments of the present invention.
Fig. **6** shows an exemplary sequence of steps carried out by software executing within the secure storage device, according to some embodiments of the present invention.
Fig. **7** illustrates an exemplary sequence of steps performed by software executing within the secure storage device to maintain a storage semantic map according to some embodiments of the present invention.

### DETAILED DESCRIPTION OF PREFERRED EMBODIMENTS

In the following description, it is understood that all recited connections between structures can be direct operative connections or indirect operative connections through intermediary structures. A set of elements includes one or more elements. Any recitation of an element is understood to refer to at least one element. A plurality of elements includes at least two elements. Unless otherwise required, any described method steps need not be necessarily performed in a particular illustrated order. A first element (e.g. data) derived from a second element encompasses a first element equal to the second element, as well as a first element generated by processing the second element and optionally other data. Making a determination or decision according to a parameter encompasses making the determination or decision according to the parameter and optionally according to other data. Unless otherwise specified, an indicator of some quantity/data may be the quantity/data itself, or an indicator different from the quantity/data itself. A computer program is a sequence of processor instructions carrying out a task. Computer programs described in some embodiments of the present invention may be stand-alone software entities or sub-entities (e.g., subroutines, libraries) of other computer programs. Computer readable media encompass non-transitory media such as magnetic, optic, and semiconductor storage media (e.g. hard drives, optical disks, flash memory, DRAM), as well as communication links such as conductive cables and fiber optic links. According to some embodiments, the present invention provides, *inter alia,* computer systems comprising hardware (e.g. one or more processors) programmed to perform the methods described herein, as well as computer-readable media encoding instructions to perform the methods described herein.

The following description illustrates embodiments of the invention by way of example and not necessarily by way of limitation.

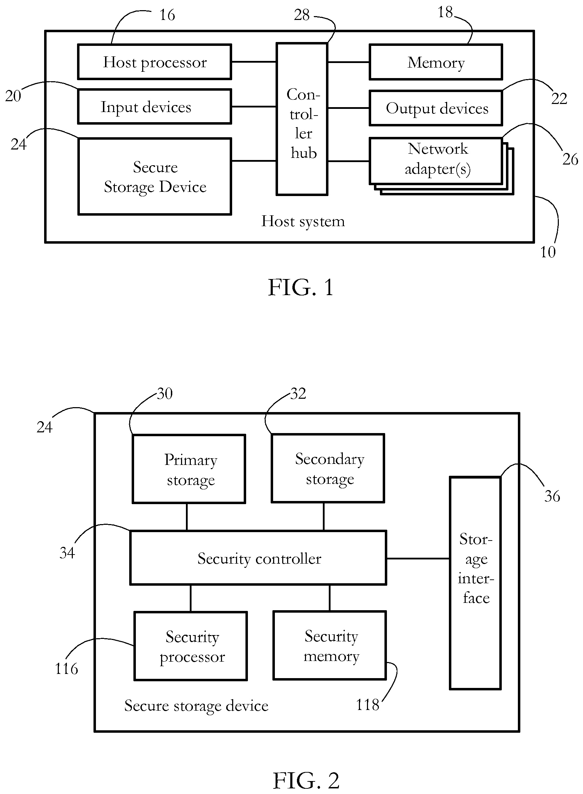

Fig. **1** shows an exemplary hardware configuration of a host system **10** protected against computer security threats according to some embodiments of the present invention. Exemplary host systems **10** include computers (e.g., a personal computer, a corporate server, etc.), mobile computing devices (e.g., laptops, tablet PC's), telecommunication devices (e.g., smartphones), digital appliances (TV's, game consoles, etc.), wearable computing devices (e.g., smartwatches), or any other electronic device having a processor and a memory, and requiring computer security protection. For simplicity, the illustrated host system is a computer system; the hardware configuration of other host systems such as mobile telephones, smartwatches, etc., may differ somewhat from the illustrated configuration.

Host system **10** comprises a set of physical devices, including a hardware processor **16** and a memory unit **18.** In some embodiments, processor **16** comprises a physical device (e.g. a microprocessor, a multi-core integrated circuit formed on a semiconductor substrate, etc.) configured to execute computational and/or logical operations with a set of signals and/or data. In some embodiments, such operations are delivered to processor **16** in the form of a sequence of processor instructions (e.g. machine code or other type of encoding). Memory unit **18** may comprise volatile computer-readable media (e.g. DRAM, SRAM) storing instructions and/or data accessed or generated by processor **16.**

Input devices **20** may include devices enabling a user to introduce data and/or instructions into host system **10,** together with the respective hardware interfaces and/or adapters making such introduction possible. Exemplary input devices include, among others, a button, a keyboard, a mouse, a joystick, a touchscreen, a microphone, a camera, a game controller, a gesture detection system, and a motion detection sensor. Output devices **22** may include display devices such as monitors and speakers among others, as well as hardware interfaces/adapters such as graphic cards, allowing host system **10** to communicate data to a user. In some embodiments, input devices **20** and output devices **22** may share a common piece of hardware, as in the case of touch-screen devices. Network adapter(s) **26** enable host system **10** to connect to a communication network, such as a local area network (LAN) and/or to other devices/computer systems.

A secure storage device **24** includes computer-readable media enabling the non-volatile storage, reading, and writing of software instructions and/or other data. Exemplary storage devices **24** include magnetic, optical, and flash memory devices, as well as removable media such as CD and/or DVD disks and drives. In some embodiments, secure storage device **24** is endowed with other hardware and software components specifically configured to enhance the security of stored data, as shown in detail below.

In some embodiments, controller hub **28** includes the plurality of system, peripheral, and/or chipset buses, and/or all other circuitry enabling the communication between processor **16** and devices **18, 20**, **22, 24,** and **26.** Exemplary components of controller hub **28** include a memory controller, an input/output (I/O) controller, and an interrupt controller. Depending on hardware manufacturer and device, some or all such controllers may be incorporated into a single integrated circuit, and/or may be integrated with processor **16.** In some embodiments, some other devices, such as graphics adapters forming part of output devices **22,** may be also integrated with processor **16.**

Fig. **2** shows an exemplary hardware configuration of secure storage device **24** according to some embodiments of the present invention. Some embodiments mitigate the risk posed by malicious software by pairing a conventional storage device - a primary storage **30** (e.g., magnetic or solid state drive) with a dedicated security processor **116** separate from the primary processor of host **10.** This auxiliary processor may be integrated with the storage unit and/or additional hardware on a common printed circuit board which assumes a conventional hard drive form factor. In another exemplary embodiment, secure storage device **24** may be packaged as an external mass storage device (e.g., flash drive, external hard drive), which may connect to host system via a conventional interface such as a universal serial bus (USB) or a Thunderbolt^{®} interface/connector.

Primary storage **30** may act as the *de facto* storage device for host system **10.** As such, primary storage **30** may store code and/or data belonging to an operating system and/or other software applications executing on host processor **16,** as well as a user's data such as documents, images, sound files, etc.

Security processor **116** comprises a physical electronic circuit (e.g., integrated circuit formed on a semiconductor substrate) configured to perform mathematical and/or logical operations with a set of signals and/or data. In some embodiments, processor **116** is a multipurpose, generic microprocessor of a type used as central processing unit (CPU) in personal computers and/or mobile telephones. Examples of such processors are conventional processors from manufacturers such as Intel^{®}, AMD^{®}, and ARM^{®}. In an alternative embodiment, processor **116** comprises a customized electronic circuit such as an application-specific integrated circuit (ASIC), or a field-programmable gate array (FPGA). Other embodiments of processor **116** include a graphics processing unit (GPU), or a combination of the above. Using such specialized processors may be advantageous in that their architecture may be especially crafted and optimized for parallel computation and certain specialized tasks. A parallel, specialized architecture may benefit applications such as encryption/decryption, as further described below.

Additional hardware components of secure storage device **24** may include a security memory **118** providing volatile computer-readable media (e.g. DRAM, SRAM) for storing instructions and/or data accessed or generated by processor **116.** Device **24** may further comprise a security controller **34** generically representing buses and/or all other circuitry interconnecting the hardware components of device **24.** Secure storage device **24** may further connect to controller hub **28** of host system **10** by way of a storage interface **36** (e.g., a Serial AT Attachment - SATA, or PCI Express interface and/or connector).

In some embodiments, secure storage device **24** may further include a secondary storage device **32** comprising non-volatile computer-readable media. In some embodiments, primary storage **30** and secondary storage **32** are implemented as distinct logical partitions of a single physical mass storage device - magnetic, optical, or solid state drive. Secondary storage **32** may be invisible to software executing on processor **16,** and may only be accessible to software executing on auxiliary security processor **116.** Such isolation may be achieved using hardware logic (circuitry of security controller **34)** configured to expose a limited range of storage addresses to host processor **16.**

Secondary storage **32** may be used to store security code and data such as malware-indicative signatures, among others. Secondary storage **32** may further store code to be executed by processor **116** at startup (boot-up). Some embodiments of secure storage device **24** use secondary storage **32** to store an encoding of a file system semantic map, as shown in more detail below. Other embodiments of storage **32** may store partial copies (e.g., backups) of data stored in primary storage **30**.

In some embodiments, primary storage **30** and secondary storage **32** are addressable via a set of location indicators (addresses). Depending on implementation, storage **30**, **32** may be divided into individual addressable units, for instance sectors, blocks, and/or clusters.

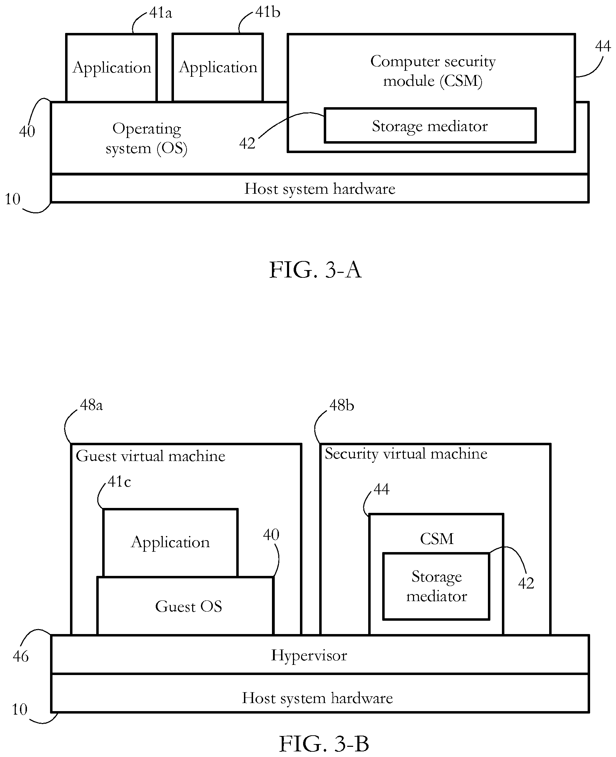

Fig. **3-A** shows exemplary software components executing on host processor **16** according to some embodiments of the present invention. An operating system (OS) **40** comprises a set of computer programs providing an interface between the hardware of host system **10** and other software such as applications **41a-b.** OS **40** may comprise any widely available operating system such as Windows^{®}, MacOS^{®}, Linux^{®}, iOS^{®}, or Android^{®}, among others. Applications **41a-b** generically represent any computer programs, including word processors, spreadsheet applications, imaging applications, games, browsers and electronic communication applications, among others.

Some embodiments of the present invention further include a computer security module (CSM) **44** comprising software protecting host system **10** against malware. CSM **44** may include, for instance, computer programs for detecting malicious software, and/or computer programs for incapacitating such software. Such components may employ any method known in the art of computer security. In some embodiments, CSM **44** further comprises a storage mediator component **42** operating as an interface between OS **40** and secure storage device **24.** An exemplary storage mediator **42** may operate as a storage driver enabling reading and writing of data from/to primary storage **30**. Storage mediator **42** may be further configured to exchange messages and/or data with software executing on security processor **116,** as shown in more detail below.

**Fig. 3-B** shows an alternative embodiment operating in a hardware virtualization environment, for instance, in a cloud computing application. A virtual machine (VM) is a term used in the art to describe an emulation of an actual physical machine/computer system, the VM capable of running an operating system and other applications. A hypervisor includes software configured to create or enable a plurality of virtualized devices, such as a virtual processor and a virtual MMU, and to present such virtualized devices to software in place of the real, physical devices of host system **10.** Such operations are commonly known as exposing a virtual machine. Hypervisors may enable sharing of hardware resources of host system **10** by multiple virtual machines, and may further manage such multiplexing so that each VM operates independently and is unaware of other VMs executing concurrently on the respective host. Examples of popular hypervisors include the VMware vSphere^{™} from VMware Inc. and the open-source Xen hypervisor, among others. In the present description, software is said to execute within a virtual machine when it executes on a virtual processor of the respective virtual machine.

In the exemplary configuration illustrated in Fig. **3-B****,** a hypervisor **46** exposes a guest VM **48a.** An operating system and a set of user applications execute within a guest virtual machine **48a,** while CSM **44** executes within a dedicated security virtual machine **48b** separate from guest VM **48a.** In an alternative embodiment to Fig. **3-B****,** CSM **44** and/or storage mediator **42** may comprise a set of libraries loaded/called by hypervisor **46.** As such, CSM **44** and/or storage mediator **42** may execute below guest VM **48a,** at a processor privilege level of hypervisor **46** (e.g., ring -1 or VMXroot on Intel^{®} platforms). Configurations such as illustrated in Fig. **3-B** may preferable to the one illustrated in Fig. **3-A** because of increased security. The virtual environments of guest VM **48a** and security VM **48b** may be relatively well isolated from each other, so that malicious software executing within guest VM **48a** cannot infect or otherwise interfere with software executing within security VM **48b.**

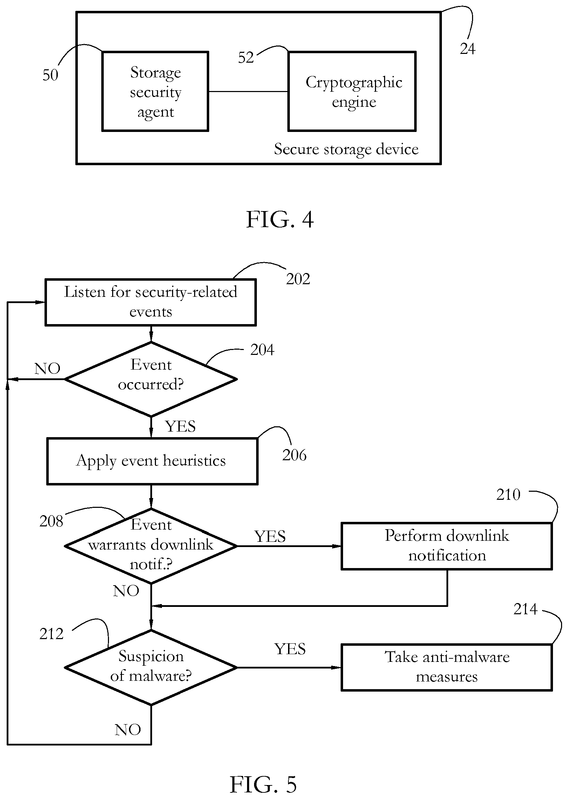

Fig. **4** shows an exemplary set of software components executing within secure storage device **24** (i.e., on processor **116)** according to some embodiments of the present invention. Illustrated software includes a storage security agent **50** and a cryptographic engine **52.** Agent **50** may be configured to maintain a file system semantic map of primary storage **30** and to apply a set of heuristics (e.g., decision rules) to determine whether a request by software executing on host processor **16** to access primary storage **30** is indicative of a computer security threat. Engine **52** may be configured to perform encryption and/or decryption operations on data packets coming to and/or from primary storage **30**. The operation of components **50** and **52** will be detailed below.

In some embodiments, CSM **44** collaborates with software executing within secure storage device **24** (e.g., security agent **50**), for instance by exchanging notifications/signals via a communication channel managed by storage mediator **42.** Exemplary notifications from processor **16** to secure storage device **24** (herein referred to as *downlink* notifications) include an indicator of an operation to be performed by processor **116,** and other data such as a filename, an encryption key, a set of flags, etc. CSM **44** may also send downlink notifications in response to certain security-relevant events, as detailed further below.

An exemplary communication channel may use the regular means of transporting data between a processor and a mass storage unit. For instance, CSM **44** and security agent **50** may exchange messages according to a storage transmission protocol such as the Serial ATA or small computer system interface (SCSI) protocols. The storage transmission protocol establishes a format of a communication via the storage interface, the size and contents of a frame/packet, the count, size, order, and/or format of headers and/or payload, the significance of various control bits and data fields, the encoding of commands, etc.

In some embodiments, a downlink notification is disguised as a dummy access request. Dummy access requests herein refer to storage access requests which are properly formatted according to the communication protocol (e.g. well-formed SATA commands), but are not supposed to be carried out as such, instead being interpreted as notifications. The term "dummy" is used to distinguish such requests from "true" or "genuine" storage access requests representing storage access operations intended to be carried out as such.

In some embodiments, dummy requests are invalid storage access requests, in the sense that executing one such dummy request causes an exception/fault. In such cases, a fault handler may intercept the respective fault and determine the request causing the respective fault as a downlink notification. In other embodiments, dummy requests are not faulty *per se,* but may comprise specific, unusual, or contradictory combinations of parameter values (flags). In yet other embodiments, dummy requests may comprise valid, regular requests; such dummy requests may be identified as such e.g., according to a content of the payload or of other data fields defined by the storage communication protocol.

One example of dummy access request comprises a request to access an out-of-range address, i.e., an address outside the normal addressable range of primary storage **30**. Examples include 'read block *B',* or 'write payload *P* at address *A*', wherein the address of block *B* and address *A* are outside of the normal addressable range of primary storage **30**. Each such address (specific value of *A* and/or *B*) may correspond to a specific instruction or event communicated to software executing inside secure storage device **24.** In another example, downlink notifications may be disguised as requests to access storage at an address which, although within the normal addressable range, is not commonly accessed during normal operation. For instance, a request to write to a storage location currently holding a master boot record (MBR) or a critical OS component (e.g., NTOSKRNL.EXE in Windows^{®}) may be intercepted by secure storage device **24** and interpreted as downlink notification from CSM **44.**

In yet another example, dummy access requests may be identified according to specific payload contents (e.g., a particular bit pattern or signature). In such embodiments, a software component executing on security processor **116** may parse payload contents to detect dummy access requests. Various payloads *P* may correspond to various notifications/instructions to secure storage device **24.**

In yet another example, dummy access requests may be identified as such according to a content of another data field defined by the storage communication protocol, for instance, according to a content of a 'Command' and/or 'Auxiliary' fields specified in the Serial ATA protocol. In one such example, a command to update malware signatures may be encoded into the 'Command' field of a dummy access request issued by CSM **44.** The actual signatures may be transmitted as the payload of another dummy access request.

Some other examples of downlink notifications include an instruction to scan data stored at a particular storage location: the respective location may be encoded into the payload of a dummy access request. In yet another example, dummy write requests comprising distinct addresses A may indicate distinct anti-malware methods or parameters. Each address or range of addresses A may indicate a distinct heuristic or a distinct group of malware-indicative signatures.

In turn, storage mediator **42** may receive notifications/signals from device **24** (herein referred to as *uplink* notifications) via an acknowledgement and/or another form of response to a downlink notification, for instance via hardware interrupts - IRQs, or asynchronous SATA notifications sent by device **24** and handled by storage mediator **42** and/or by another event handler of OS **40**. Exemplary uplink notifications include, among others, a security alert, for instance an indicator of a probable ransomware attack, and an indicator of an attempt to update a firmware of storage device **24.**

Yet another exemplary uplink notification comprises a request for a cryptographic key. In one such example, security agent **50** may detect an attempt to write an encrypted data packet. Such an attempt may indicate that automatic encryption of disk data is activated (e.g., Bitlocker^{®} technology from Microsoft^{®}). In response, some embodiments may request a cryptographic key from CSM **44.** More details of this method are given further below.

Some embodiments implement a version of iterative malware detection using a sequence of downlink-uplink notifications. In one such example, a downlink notification instructs storage security agent **50** to scan a particular file for malware. Agent **50** may then communicate a result of the scan to CSM **44,** which may select another file or folder according to the result of the first scan and communicate the new scan target to security agent **50** via a new downlink notification, etc. Such iterative schemes may enable fairly complex malware detection procedures having to install complex software on secure storage device **24.**

Fig. **5** shows an exemplary sequence of steps performed by CSM **44** according to some embodiments of the present invention. CSM **44** may aggregate security-related data from a plurality of sources within host system **10,** and may receive notifications about the occurrence of certain events during execution of software. One exemplary source is a system call function of OS **40**, which is modified by hooking to signal to CSM **44** every time the respective system call occurs. Other exemplary sources of security information and notifications include OS minifilters. In some embodiments, CSM **44** may further receive uplink notifications about from secure storage device **24.** In response to detecting the occurrence of an event, in a step **206** CSM **44** may apply a set of heuristics to determine whether host system **10** is currently under attack. When the analysis reveals a suspicion of malware, CSM **44** may take appropriate anti-malware measures (steps **212-214),** for instance blocking or otherwise preventing execution of a malicious process, and alerting a user or an administrator of host system **10.** Some detected events warrant a downlink notification to secure storage device **24.** In one such example, CSM **44** may direct security agent **50** to perform an investigation of a storage access attempt. Downlink notifications are illustrated as steps **208-210** in Fig. **5****.**

In some embodiments, storage security agent **50** re-creates the semantics of the file system used by OS **40** from metadata stored on storage **30**, in a manner which is independent of the file system of OS **40**. Stated otherwise, agent **50** maintains a file system semantic knowledgebase amounting to an alternative or shadow of the file system of OS **40**. In conventional computer systems, at the hardware level data is stored as blocks that lack semantic information. For instance, it is not clear which chunk of data belongs to which file/folder. A further complication is fragmentation, wherein a single file's data is not stored contiguously, but is dispersed at various locations throughout the storage medium. The bookkeeping task of associating assets with storage locations and transforming hardware-level information into meaningful data is commonly taken up by the OS. The OS manages such tasks by maintaining a specialized data structure known as a file system, encoded as metadata and stored within a particular section of the storage medium. Exemplary file systems include FAT, FAT32, and NTFS, among others.

In some embodiments, the file system semantic map comprises an encoding of a mapping between a section of primary storage **30** and an item of a file system of OS **40**. Exemplary file system items include a directory and a file. An exemplary semantic map item associates a range of addresses [A1 A2] with a file F (wherein F may be represented as a path, e.g., C:\user\docs\Letter.txt or /home/user/docs/Letter.txt). Such an association effectively indicates that data stored in the respective range of addresses forms a part of file F. Another exemplary file system semantic map item specifies that the range of addresses [A3 A4] stores file system metadata. Yet another exemplary file system semantic map item associates an individual addressable unit (e.g., storage block or sector, as opposed to address range) with a file system item. Semantic map data may be encoded using any method known in the art, for instance as a bitmap, linked list, etc.

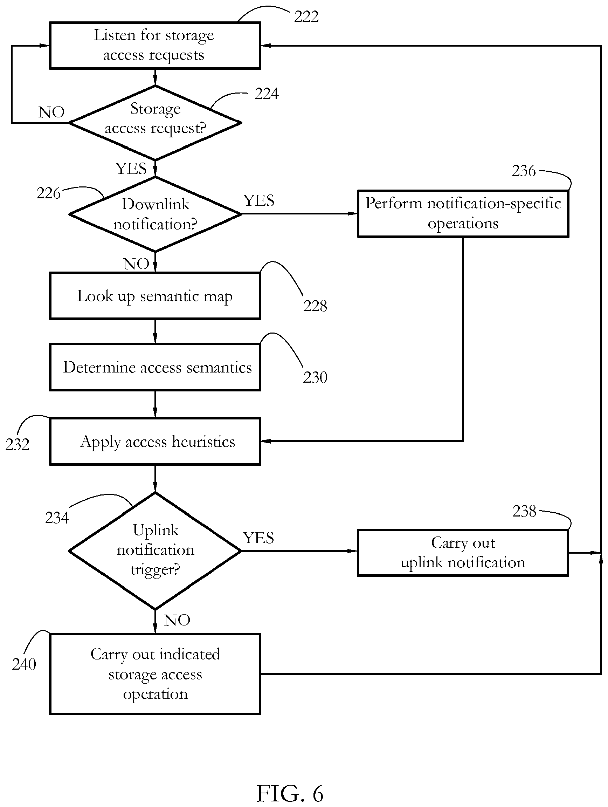

Fig. **6** shows an exemplary sequence of steps performed by storage security agent **50** according to some embodiments of the present invention. Agent **50** receives storage access requests from OS **40** via storage interface **36.** A typical request includes an indicator of an operation (read, write), an indicator of an address, and a payload. Exemplary storage access requests have the semantics of "read a block of N bytes at address A" and "write payload P at address A". Access requests may further comprise a set of parameter values (e.g., flags, attributes) of the respective request. The actual format and encoding of storage access requests may vary among hardware and software implementations.

When an access request arrives at device **24,** agent **50** may determine according to parameters of the request whether the respective request indicates a true storage access or a dummy storage access (i.e., a notification from CSM **44).** In one exemplary embodiment, a request to access an out-of-range address may indicate such a notification. When the respective access request comprises a downlink notification, a step **236** may select and perform a specific action according to parameters of the respective request (see some examples below).

In a sequence of steps **228-230**, security agent **50** may further decode the semantics of the respective storage access request according to the semantic map. For instance, agent **50** may determine whether what is being written is metadata or an actual file, whether a new file is being created, which particular file is currently being written or read, etc. A further step 232 may apply a set of access heuristics to determine whether the requested access is indicative of a computer security threat. When no, agent **50** may allow the respective access to proceed. When heuristics indicate that the requested access request warrants notifying computer security module **44,** agent **50** may perform an uplink notification amounting to a security alert.

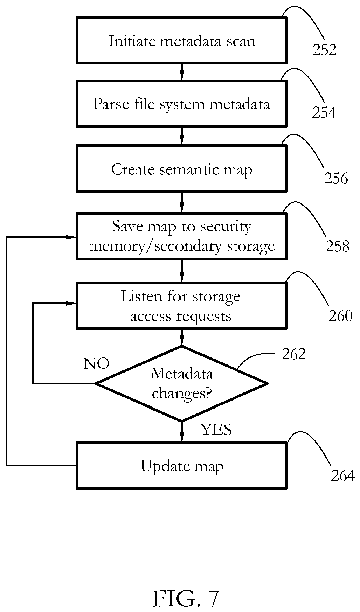

Fig. **7** shows an exemplary sequence of steps carried out by storage security agent **50** to maintain the file system semantic map. Map creation may be initiated, for instance, at boot-up. In some embodiments, agent **50** may determine a location on primary storage **30** where file system metadata used by OS **40** is stored. Several methods for achieving this are known in the art of computer forensics. Some embodiments use a software component executing on the host (e.g., CSM **44)** to determine the location of file system data. CSM **44** may then communicate the respective location to security agent **50** using downlink notifications.

In a sequence of steps **254-256,** agent **50** parses file system metadata stored in primary storage **30** and assembles the semantic map according to the respective metadata. Some embodiments store the determined semantic map data (i.e., shadow file system) in security memory **118** and/or secondary storage **32.** Then, during execution of software on processor **16,** agent **50** may listen for storage access requests and determine whether such requests indicate a change in metadata (for instance, file/directory creation or deletion). When yes, agent **50** may update the semantic map accordingly (steps **260-262-264** in Fig. **7****).**

The illustrated system of notifications and heuristics may be used for a variety of applications, some examples of which are given below.

### Command filtering to protect hardware

Carefully crafted malicious software may exploit certain features of the ATA command set (e.g., the DOWNLOAD MICROCODE command) to surreptitiously update a storage device's firmware thereby introducing hardware-level malware into the device itself. One such exemplary malware is a backdoor which may be used by software executing on the host to alter the behavior of and/or control the respective storage device.

To prevent such advanced attacks, in some embodiments storage security agent **50** is configured to filter storage access requests received via storage interface **36.** The filtering rules may be basic, for instance, only allow execution of most common access requests (e.g., commands for reading, writing, identifying a device, etc.), and block all other commands/requests. Other embodiments may implement more sophisticated filtering heuristics, for instance filtering rules adapted to the current context. In another example, security agent **50** may condition execution of certain ATA commands/access requests upon an explicit confirmation from an administrator of host system **10.**

In some embodiments, certain commands/requests are not blocked, but instead emulated and further analyzed by software executing on security processor **116** (e.g., by security agent **50**). In response to receiving such a command, security software may return an artificial response, to trick software executing on host processor **16** into believing that the respective command/access request was successfully carried out. Security agent **50** may further log such commands, to aid anti-malware research.

### Event interception and interpretation at hardware level

Maintaining the semantic map (shadow file system) enables storage security agent **50**, in response to receiving an access request, to detect security-relevant events occurring during execution of software on processor **16.** For instance, in response to a write request, agent **50** may determine whether what is being written is metadata or actual contents of a file, whether the respective write is directed to an empty storage section or is overwriting existing information, whether the respective write is a genuine write or a downlink notification from processor **16,** etc.

File system events such as file creation, file deletion, and file rewrite are carried out according to event-specific sequences of operations. An exemplary pattern may include a metadata read, followed by a metadata write, followed by a payload write. Agent **50** may use a set of heuristics that encode such patterns, to identify a type of each file system event. Furthermore, agent **50** may identify the target of each read/write operation, e.g., which file is being written to, which file is being read.

In contrast to conventional computer security systems/methods, such event interception occurs virtually without the knowledge of software executing on processor **16.** Therefore, malicious software may not prevent or otherwise interfere with the event detection. Security software such as agent **50** may then notify the occurrence of certain events deemed relevant to security to CSM **44** using uplink notifications.

### On-access malware scanning

Security agent **50** may detect an attempt to open a file and/or an attempt to execute an executable file. Other operations that may be detected in this manner include a file append and an allocation of storage for subsequent writes. Each such event may be used as a trigger to launch a scan of the respective file, or a scan of a resource (main executable, library, etc.) belonging to the process that ordered the respective storage access. The scan may be carried while the process that issued the storage access request is suspended, or offline while the respective process is allowing to continue execution.

The scan may be performed according to any method known in the art of computer security, e.g., by matching a content of the respective file against a library of malware-indicative signatures or code patterns. A library of malware-indicative signatures may be stored on secondary storage **32** for this purpose. The library may be kept up to date via periodic or on demand updates. Some embodiments update the signature library and/or other software executing on secure storage device **24** via a set of downlink notifications (e.g., dummy storage access requests).

In a variant of on-access scanning, agent **50** may use a set of heuristics to detect a boot sequence of host system **10** and/or OS **40**. Stated otherwise, by analyzing a sequence of storage access requests, agent **50** may determine that host system **10** is currently in the process of booting (i.e., hardware and/or software initialization). An exemplary boot sequence typically begins with a sequence of read requests from a location storing a data structure known as the master boot record (MBR) or GUID partition table (GPT).

| Identify Device | | |
|---|---|---|
| Read DMA Ext | A: 00000000 | C: 0001 |
| Read DMA Ext | A: 00000000 | C: 0001 |
| Read DMA Ext | A: 00000001 | C: 0001 |
| Read DMA Ext | A: E8E088AF | C: 0001 |
| Read DMA Ext | A: 00000002 | C: 0020 |
| Read DMA Ext | A: E8E0888F | C: 0020 |
| Read DMA Ext | A: 00000002 | C: 0020 |
| ... | | |

An exemplary sequence of storage access requests indicating that OS **40** has started loading is illustrated below:

| Identify Device | | |
|---|---|---|
| Read FPDMA Queued | A: 00000000 | C: 0001 T: 04 |
| Read FPDMA Queued | A: 00000001 | C: 0001 T: 05 |
| Read FPDMA Queued | A: 00000002 | C: 0020 T: 06 |
| Read FPDMA Queued | A: 00000000 | C: 0001 T: 07 |
| ... | | |

Another typical feature of a boot sequence of access requests comprises very long sequences of read requests (e.g., 2-3000 consecutive read requests) interrupted by short sequences of 2-5 write requests. Such patterns may be OS-specific. Pattern analysis may combine a count of consecutive read/write requests with an analysis of address information and/or of other parameter values to infer various stages of the boot process.

Some embodiments may combine access request pattern matching with semantic map information, to detect an initialization of OS **40**. In one such example, security agent **50** may carry an iterative procedure to harvest information about the type and/or location of software executing on host processor **16,** directly from storage access events. By detecting access to the master boot record, agent **50** may determine partition information. Then, a series of read requests are targeted at the volume headers. From such requests, agent **50** may determine and validate information about the respective volumes. Next, agent **50** may automatically identify a storage location of a set of important OS files (e.g., resources that OS **40** loads upon initialization, such as NTOSKRNL.EXE in Windows^{®}), by following the sequence of reads and/or writes that accompanies the boot. The respective boot sequence may also reveal a type of operating system (e.g., make, version, etc. of OS **40**).

Some embodiments may then scan every file that is being opened during a time period (e.g., several seconds) following the detected boot/initialization phase. Scanning may include integrity verification, i.e., determining whether the content of a file have been corrupted, for instance by malicious software. Integrity verification may comprise comparing a hash of the current content of the respective file with a reference hash stored on secondary storage 32.

In yet another exemplary application related to boot sequences, some embodiments may use secure storage device **24** as an agent executing outside OS **40** and configured to test the integrity and/or trustworthiness of OS **40**. For instance, agent **50** may automatically detect a request to reboot host system **10.** Then, in response to detecting that the reboot is actually underway (e.g., from device detection and initialization operations, or in response to a downlink notification by CSM **44),** agent **50** may suspend the normal boot sequence and expose an alternative OS or security agent configured to scan data structures of OS **40** and/or the boot area of primary storage **30**. When the scan is complete and the system deemed safe, agent **50** may resume booting of OS **40**.

### Protecting stored assets

The boot area of primary storage **30** typically stores resources that are read before the OS is loaded. By maintaining the semantic map, agent **50** may determine whether a write request targets the respective boot area, and in response, may block the respective write and/or notify CSM **44.** A similar strategy may be used to protect valuable assets of OS **40** or other applications, such as certain files, libraries, etc.

### Operating with encrypted data

Some versions of OS **40** have the option to keep data in encrypted form on primary storage **30**. One such example is the Bitlocker^{®} feature of Microsoft^{®} Windows^{®}. When stored data is encrypted, an entity executing outside OS **40** (including storage security agent **50**) may not have access to the respective data, or to system metadata that allow construction of the file system semantic map.

However, agent **50** may collaborate with CSM **44** to obtain an encryption key, or information conducive to deriving the respective key. Such information may include, for instance, a password, a secret, a nonce, etc., and is hereby termed encryption key material. CSM **44** may expose a user interface requesting a user password or another secret used in relation to the respective key, and communicate the password/secret to agent **50**. In another embodiment, CSM **44** may interface directly with the OS's encryption agent (e.g., Bitlocker^{®} modules) to obtain key material. In response to obtaining key material, CSM **44** may communicate the key material itself, or a storage location of said key material, to agent **50** via a downlink notification (e.g., a dummy storage access request).

Once in possession of the encryption key, agent **50** may use cryptographic engine 52 to decrypt stored data in order to construct and/or maintain the file system semantic map. In some embodiments, agent **50** may further use the encryption key to perform online scanning/analysis of data traffic to and/or from primary storage **30**, virtually without knowledge of OS **40** or of other software executing on host processor **16.** In one example, in response to intercepting a write request, security agent **50** may decrypt and analyze the respective payload, before writing the original (encrypted) payload to the intended address. In some embodiments, in response to decrypting the respective payload, agent **50** may save an unencrypted version of the payload to secondary storage **32.**

### Generic encryption detection

Some embodiments of storage security agent **50** may automatically determine whether data stored within a section (e.g., block, sector, etc.) of storage **30** is encrypted or not. Such determinations may use information complexity measures such as entropy or other methods known in the art. To avoid false positives, some embodiments may use metadata available for the respective file to determine whether the respective file is likely to have high entropy without necessarily being encrypted. Such examples include data compressed according to formats such as MP3, JPG, MPG, ZIP, etc. To determine whether the respective file falls into one of these categories, some embodiments may locate the header section of the respective file according to metadata, and search for file type information in the respective header.

In some embodiments, each entry of the file system semantic map may be augmented with a set of flags, indicating for instance whether the respective file system item (file, folder, etc.) is encrypted or not, whether the respective file system item is compressed or not, etc. The flags may be maintained by agent **50** together with the rest of the semantic map data.

### Detection of advanced ransomware

The systems and methods described herein allow automatically detecting an attempt to encrypt stored data. The detection is performed independently from, and is virtually undetectable by, software executing on processor 16. A useful application of such automatic encryption detection comprises detection of ransomware and other type of malicious software whose actions include the unauthorized or unintended encryption of user data.

One exemplary detection heuristic comprises detecting an attempt to overwrite unencrypted content with encrypted content. Another set of detection heuristics employ statistics to compare the current stream of storage access requests to a "normal" pattern corresponding to a specific user and/or a running application. To achieve detection, some embodiments determine a set of user profiles and/or application profiles indicating, for instance, what applications/processes are likely to be launched by a particular user, what storage locations are typically accessed by the respective user, what is the typical pattern of storage requests associated with each process/application, etc. When a current sequence of storage access requests leaves the pattern of "normality", for instance when agent **50** detects an unusual spike in file creation activity, wherein the content of the respective files is encrypted, agent **50** may determine that a ransomware attack is underway.

When agent **50** detects suspicious encryption activity, agent **50** may suspend the respective activity (for instance, block a set of suspicious writes), and/or signal to CSM **44** using the uplink notification mechanism. In turn, CSM **44** may use the notification as a warning of a possible attack, or may apply extra heuristics, for instance to correlate events notified by agent **50** with other malware-indicative events occurring on host system **10** or on other computers connected to host system **10** over a communication network.

### Asset shadowing for applications such as software versioning and backup

In some embodiments, storage security agent **50** automatically detects an attempt to delete or overwrite a file, and in response, saves a copy of the deleted/overwritten data to a separate location, either on primary storage **30** or on secondary storage **32.** A shadow copy of the file being deleted or overwritten is thus kept alongside the newly written data. Some embodiments save more than two consecutive versions of the same file, wherein at least one of the respective versions is unencrypted. This mechanism may allow a safe recovery of data, by potentially restoring the respective file to any of the saved versions.

Possible applications of such asset shadowing include security, backup, and software versioning, among others. In a computer security embodiment, agent **50** may detect, for instance, that a particular file is repeatedly overwritten within a relatively short time interval. Such file activity may be malware-indicative. Some embodiments may compare successive versions of the same file, to determine, for instance, whether a newer version is encrypted while an older one is not. As mentioned before, such changes in encryption may indicate a ransomware attack. More generally, keeping a backup copy of a file may potentially prevent malicious software from modifying important OS assets, thus preventing malicious hooking of OS functions, for instance. When such a modification is detected, agent **50** may notify CSM **44.** In turn, CSM **44** may instruct agent **50** to roll back changes to a particular file.

### Optimization

Some embodiments may be further optimized to lower the computational overhead of unscrambling file system semantics from the level of secure storage device **24.** In a hybrid embodiment, semantics indicators are delivered from CSM **44** to security agent **50**, while agent **50** may intercept and counteract malicious storage events such as file deletion, file overwrite, unauthorized data encryption, etc. In such embodiments, CSM **44** may comprise a lightweight storage access filter having a functionality similar to that of a file system minifilter in Windows^{®}. The storage access filter may determine, for instance, an attempt to write to a file, a name and/or disk location of the respective data/file, and an identity of a process carrying out the write operation, among others. Then the storage access filter may transmit such semantic information to storage security agent **50** via a downlink notification. Agent **50** may acknowledge receipt using an acknowledgement packet or an uplink notification. In some embodiments, downlink notifications are added to a notification queue.

At the level of secure storage device **24,** agent **50** may identify an attempt to write and try to match the respective attempt it with data from the downlink notification queue. A successful match allows agent **50** to determine the semantics of the respective write attempt, which may allow agent **50** to apply more sophisticated heuristics to determine whether the respective write attempt is suspicious, needs to be prevented, etc. A failure to match a write attempt detected at hardware level (i.e., from specific metadata changes) to a write attempt conveyed via a downlink notification may indicate malicious software capable of avoiding detection by the storage access minifilter of OS **40**. In such cases, security agent **50** may block the respective write attempt and/or notify CSM **44** via an uplink notification.

The present invention relates to systems and methods for protecting a host system against computer security threats such as malicious software, among others. The described systems and methods are particularly suited for protecting host systems (e.g., computers, mobile communication devices, etc.) against sophisticated malware that is capable of subverting conventional defenses. Exemplary applications include protection against ransomware and the theft of proprietary, private, and/or confidential data.

Some embodiments of the present invention rely on the observation that malicious software may successfully interfere in the traffic of data between the processor of the host system and non-volatile storage (e.g., magnetic, optical, or solid state drive). Security software executing on the respective processor may be unable to block or prevent all such interference, resulting in a substantial risk of data theft or loss. To address this problem, exemplary embodiments of the present invention displace parts of the security software onto a separate processor configured to intercept, analyze, and/or selectively block data traffic between the main processor of the host system and the storage device. The auxiliary security processor may be integrated with the storage device and/or additional hardware, for instance on a common printed circuit board, to form an enhanced secure storage device. Said secure storage device may assume a conventional form factor of a hard drive or other non-volatile storage, and may connect to the rest of the hardware of the host system via a conventional storage interface/connector, such as a serial AT attachment (SATA) or peripheral component interconnect (PCI) Express interface/connector. In an alternative embodiment, the secure storage device (i.e., storage + auxiliary processor) may be packaged as an external drive, connected to the host system for instance by way of a universal serial bus (USB) or another conventional interface/connector.

In conventional anti-malware systems, prevention, detection, and countermeasures are implemented in software executing on the same physical processor that also runs the malicious code. Furthermore, in conventional systems, both malware and legitimate software can access the same physical storage device (e.g., hard drive). Such configurations potentially allow carefully-crafted malicious code to undermine the security software. In contrast, in some embodiments of the present invention, access to physical storage is controlled by an auxiliary processor, distinct from the main processor running the user applications (and potentially, malicious code). Security software executing on the auxiliary processor is therefore out of the reach of malware.

It will be clear to one skilled in the art that the above embodiments may be altered in many ways without departing from the scope of the invention. Accordingly, the scope of the invention should be determined by the following claims.

## Claims

1. A computer system comprising a first hardware processor [16] and a secure storage device [24], the secure storage device [24] connected to the first hardware processor [16] via a storage interface [36] configured to receive storage access requests formatted according to a storage transmission protocol, wherein the secure storage device [24] comprises a second hardware processor [116] and a non-volatile storage unit [30], and wherein:
the first hardware processor [16] is configured to:
in response to detecting a request by software executing on the first hardware processor [16] to store a data packet on the storage unit [30], encrypt the data packet,
in response to encrypting the data packet, transmit a true storage access request to the storage interface [36], the true storage access request comprising the encrypted data packet,
generate a dummy storage access request according to the storage transmission protocol, the dummy storage access request comprising at least a part of a cryptographic key, and
transmit the dummy storage access request to the storage interface [36]; and
the second hardware processor [116] is configured to:
in response to receiving a communication via the storage interface [36], determine whether the communication comprises the dummy storage access request;
in response, when the communication comprises the dummy storage access request, determine the cryptographic key according to the dummy storage access request,
in response to receiving the true storage access request, employ the cryptographic key to decrypt the data packet, and
determine whether the decrypted data packet comprises malicious software.

2. The host system of claim 1, wherein the second hardware processor [116] is further configured, in response to determining whether the decrypted data packet comprises malicious software, when the decrypted data packet comprises malicious software, to transmit a notification formatted according to the storage transmission protocol to the storage interface [36], the notification configured to cause the first hardware processor [16] to interpret the notification message as a security alert.

3. The host system of claim 2, wherein the notification is configured to cause a hardware interrupt in the first hardware processor [16].

4. The host system of claim 1, wherein the communication comprises an address indicative of a location on the storage unit [30], and wherein the second hardware processor [116] is configured to determine whether the communication comprises the dummy storage access request according to the address.

5. The host system of claim 4, wherein determining whether the communication comprises the dummy storage access request comprises:
comparing the address to a predetermined address; and
in response, determining that the communication comprises the dummy storage access request according to a result of the comparison.

6. The host system of claim 1, wherein the communication comprises a request to write a payload to the storage unit [30], and wherein the second hardware processor [116] is configured to determine whether the communication comprises the dummy storage access request according to the payload.

7. The host system of claim 1, wherein the second hardware processor [116] is further configured to:
maintain a shadow file system comprising a mapping between a plurality of data packets stored on the storage unit [30] and a plurality of files of a primary file system maintained by an operating system [40] executing on the first hardware processor [16];
in response to receiving the true storage access request, identify according to the shadow file system a file of the plurality of files, so that the data packet forms a part of the file; and
in response to identifying the file, determine whether the file comprises malicious software.

8. The host system of claim 1, wherein the second hardware processor [116] is further configured to:
determine according to the shadow file system whether another communication received from the first hardware processor [16] via the storage interface [36] indicates a creation of a new file; and
in response, when the another communication indicates the creation of the new file, update the shadow file system to indicate the creation of the new file.

9. The host system of claim 1, wherein the second hardware processor [116] is further configured, in response to decrypting the data packet, to write the decrypted data packet to the storage unit [30].

10. The host system of claim 1, wherein the storage interface [36] comprises an item selected from a group consisting of a serial ATA interface and a universal serial bus (USB) interface.

11. A computer security method comprising:
connecting a secure storage device [24] to a first hardware processor [16] via a storage interface [36] configured to receive storage access requests formatted according to a storage transmission protocol, wherein the secure storage device [24] comprises a second hardware processor [116] and a non-volatile storage unit [30];
in response to detecting a request by software executing on the first hardware processor [16] to store a data packet on the storage unit [30], employing the first hardware processor [16] to encrypt the data packet;
in response to encrypting the data packet, employing the first hardware processor [16] to transmit a true storage access request to the storage interface [36], the true storage access request comprising the encrypted data packet;
employing the first hardware processor [16] to generate a dummy storage access request according to the storage transmission protocol, the dummy storage access request comprising at least a part of a cryptographic key;
employing the first hardware processor [16] to transmit the dummy storage access request to the storage interface [36];
in response to receiving a communication via the storage interface [36], employing the second hardware processor [116] to determine whether the communication comprises the dummy storage access request;
in response, when the communication comprises the dummy storage access request, employing the second hardware processor [116] to employ the cryptographic key to decrypt the data packet; and
in response to decrypting the data packet, employing the second hardware processor [116] to determine whether the decrypted data packet comprises malicious software.

12. The method of claim 11, further comprising, in response to determining whether the decrypted data packet comprises malicious software, when the decrypted data packet comprises malicious software, employing the second hardware processor [116] to transmit a notification formatted according to the storage transmission protocol to the storage interface [36], the notification configured to cause the first hardware processor [16] to interpret the notification message as a security alert.

13. The method of claim 12, wherein the notification is configured to cause a hardware interrupt in the first hardware processor [16].

14. The method of claim 11, wherein the communication comprises an address indicative of a location on the storage unit [30], and wherein the second hardware processor [116] is configured to determine whether the communication comprises the dummy storage access request according to the address.

15. The method of claim 14, wherein determining whether the communication comprises the dummy storage access request comprises:
employing the second hardware processor [116] to compare the address to a predetermined address; and
in response, determining that the communication comprises the dummy storage access request according to a result of the comparison.

16. The method of claim 11, wherein the communication comprises a request to write a payload to the storage unit [30], and wherein the second hardware processor [116] is configured to determine whether the communication comprises the dummy storage access request according to the payload.

17. The method of claim 11, further comprising:
employing the second hardware processor [116] to maintain a shadow file system comprising a mapping between a plurality of data packets stored on the storage unit [30] and a plurality of files of a primary file system maintained by an operating system [40] executing on the first hardware processor [16];
in response to receiving the true storage access request, employing the second hardware processor [116] to identify according to the shadow file system a file of the plurality of files, so that the data packet forms a part of the file; and
in response to identifying the file, employing the second hardware processor [116] to determine whether the file comprises malicious software.

18. The method of claim 11, further comprising:
employing the second hardware processor [116] to determine according to the shadow file system whether another communication received from the first hardware processor [16] via the storage interface indicates a creation of a new file; and
in response, when the another communication indicates the creation of the new file, employing the second hardware processor [116] to update the shadow file system to indicate the creation of the new file.

19. The method of claim 11, further comprising, in response to decrypting the data packet, employing the second hardware processor [116] to write the decrypted data packet to the storage unit [30].

20. The method of claim 11, wherein the storage interface [36] comprises an item selected from a group consisting of a serial ATA interface and a universal serial bus (USB) interface.

## Patentansprüche

1. Computersystem mit einem ersten Hardwareprozessor [16] und einem sicheren Speichergerät [24], wobei das sichere Speichergerät [24] mit dem ersten Hardwareprozessor [16] über eine Speicherschnittstelle [36] verbunden ist, die so konfiguriert ist, dass sie Speicherzugriffsanforderungen empfängt, die gemäß einem Speicherübertragungsprotokoll formatiert sind, wobei das sichere Speichergerät [24] einen zweiten Hardwareprozessor [116] und eine nichtflüchtige Speichereinheit [30] umfasst, und wobei:
der erste Hardware-Prozessor [16] konfiguriert ist, um:
als Reaktion auf das Erkennen einer Anforderung durch Software, die auf dem ersten Hardwareprozessor [16] ausgeführt wird, ein Datenpaket auf der Speichereinheit [30] zu speichern, das Datenpaket zu verschlüsseln,
als Reaktion auf das Verschlüsseln des Datenpakets eine echte Speicherzugriffsanforderung an die Speicherschnittstelle [36] zu übertragen, wobei die echte Speicherzugriffsanforderung das verschlüsselte Datenpaket umfasst,
eine Pseudo-Speicherzugriffsanforderung gemäß dem Speicherübertragungsprotokoll zu erzeugen, wobei die Pseudo-Speicherzugriffsanforderung zumindest einen Teil eines kryptographischen Schlüssels umfasst, und
die Pseudo-Speicherzugriffsanforderung an die Speicherschnittstelle [36] zu übertragen; und
der zweite Hardware-Prozessor [116] konfiguriert ist, um:
als Reaktion auf das Empfangen einer Mitteilung über die Speicherschnittstelle [36] zu ermitteln, ob die Mitteilung die PseudoSpeicherzugriffsanforderung umfasst;
als Reaktion darauf, wenn die Mitteilung die Pseudo-Speicherzugriffsanforderung umfasst, den kryptographischen Schlüssel gemäß der PseudoSpeicherzugriffsanforderung zu bestimmen,
als Reaktion auf das Empfangen der echten Speicherzugriffsanforderung den kryptographischen Schlüssel einzusetzen, um das Datenpaket zu entschlüsseln, und
zu bestimmen, ob das entschlüsselte Datenpaket bösartige Software enthält.

2. Hostsystem nach Anspruch 1, wobei der zweite Hardwareprozessor [116] ferner so konfiguriert ist, dass er als Reaktion auf das Bestimmen, ob das entschlüsselte Datenpaket bösartige Software enthält, wenn das entschlüsselte Datenpaket bösartige Software enthält, eine gemäß dem Speicherübertragungsprotokoll formatierte Meldung an die Speicherschnittstelle [36] sendet, wobei die Meldung so konfiguriert ist, dass sie den ersten Hardwareprozessor [16] veranlasst, die Benachrichtigungsmeldung als Sicherheitswarnung zu interpretieren.

3. Hostsystem nach Anspruch 2, wobei die Meldung so konfiguriert ist, dass sie eine Hardwareunterbrechung in dem ersten Hardwareprozessor [16] auslöst.

4. Hostsystem nach Anspruch 1, wobei die Mitteilung eine Adresse umfasst, die eine Stelle auf der Speichereinheit [30] anzeigt, und wobei der zweite Hardwareprozessor [116] konfiguriert ist, um zu bestimmen, ob die Meldung die Pseudospeicherzugriffsanforderung gemäß der Adresse umfasst.

5. Hostsystem nach Anspruch 4, wobei das Bestimmen, ob die Mitteilung die Pseudo-Speicherzugriffsanforderung umfasst, umfasst:
die Adresse mit einer vorbestimmten Adresse zu vergleichen; und
als Reaktion darauf, zu bestimmen, dass die Mitteilung die PseudoSpeicherzugriffsanforderung gemäß einem Ergebnis des Vergleichs umfasst.

6. Hostsystem nach Anspruch 1, wobei die Mitteilung eine Anforderung umfasst, eine Payload/Nutzdaten auf die Speichereinheit [30] zu schreiben, und wobei der zweite Hardwareprozessor [116] konfiguriert ist, um zu bestimmen, ob die Mitteilung die Pseudospeicherzugriffsanforderung gemäß der Payload/den Nutzdaten umfasst.

7. Das Hostsystem nach Anspruch 1, wobei der zweite Hardwareprozessor [116] ferner konfiguriert ist, um:
ein Schattendateisystem zu unterhalten, das eine Abbildung zwischen einer Vielzahl von Datenpaketen, die auf der Speichereinheit [30] gespeichert sind, und einer Vielzahl von Dateien eines primären Dateisystems umfasst, das von einem Betriebssystem [40] unterhalten wird, das auf dem ersten Hardwareprozessor [16] ausgeführt wird;
als Reaktion auf das Empfangen der echten Speicherzugriffsanforderung, eine Datei aus der Vielzahl von Dateien gemäß dem Schattendateisystem derart zu identifizieren, dass das Datenpaket einen Teil der Datei bildet; und
als Reaktion auf das Identifizieren der Datei, zu bestimmen, ob die Datei bösartige Software enthält.

8. Hostsystem nach Anspruch 1, wobei der zweite Hardwareprozessor [116] ferner konfiguriert ist, um:
gemäß dem Schattendateisystem zu bestimmen, ob eine andere Mitteilung, die von dem ersten Hardwareprozessor [16] über die Speicherschnittstelle [36] empfangen wird, eine Erstellung einer neuen Datei anzeigt; und
als Reaktion darauf, wenn die andere Mitteilung die Erstellung der neuen Datei anzeigt, das Schattendateisystem zu aktualisieren, um die Erstellung der neuen Datei anzuzeigen.

9. Hostsystem nach Anspruch 1, wobei der zweite Hardwareprozessor [116] ferner so konfiguriert ist, dass er als Reaktion auf das Entschlüsseln des Datenpakets das entschlüsselte Datenpaket auf die Speichereinheit [30] schreibt.

10. Hostsystem nach Anspruch 1, wobei die Speicherschnittstelle [36] ein Element umfasst, das aus einer Gruppe ausgewählt ist, die aus einer seriellen ATA-Schnittstelle und einer universellen seriellen Bus-Schnittstelle [USB] besteht.

11. Computersicherheitsverfahren, das Folgendes umfasst:
ein sicheres Speichergerät [24] mit einem ersten Hardware-Prozessor [16] über eine Speicherschnittstelle [36] zu verbinden, die so konfiguriert ist, dass sie Speicherzugriffsanforderungen empfängt, die gemäß einem Speicherübertragungsprotokoll formatiert sind, wobei das sichere Speichergerät [24] einen zweiten HardwareProzessor [116] und eine nichtflüchtige Speichereinheit [30] umfasst;
als Reaktion auf das Erkennen einer Anforderung durch Software, die auf dem ersten Hardwareprozessor [16] ausgeführt wird, ein Datenpaket auf der Speichereinheit [30] zu speichern, den ersten Hardwareprozessor [16] zu verwenden, um das Datenpaket zu verschlüsseln;
als Reaktion auf das Verschlüsseln des Datenpakets, den ersten Hardwareprozessor [16] einzusetzen, um eine echte Speicherzugriffsanforderung an die Speicherschnittstelle [36] zu übertragen, wobei die echte Speicherzugriffsanforderung das verschlüsselte Datenpaket umfasst;
den ersten Hardware-Prozessor [16] einzusetzen, um eine PseudoSpeicherzugriffsanforderung gemäß dem Speicherübertragungsprotokoll zu erzeugen, wobei die Pseudo-Speicherzugriffsanforderung zumindest einen Teil eines kryptographischen Schlüssels umfasst;
den ersten Hardware-Prozessor [16] einzusetzen, um die PseudoSpeicherzugriffsanforderung an die Speicherschnittstelle [36] zu übertragen;
als Reaktion auf das Empfangen einer Mitteilung über die Speicherschnittstelle [36], den zweiten Hardware-Prozessors [116] einzusetzen, um zu bestimmen, ob die Mitteilung die Pseudo-Speicherzugriffsanforderung umfasst;
als Reaktion darauf, wenn die Mitteilung die Pseudo-Speicherzugriffsanforderung umfasst, den zweiten Hardware-Prozessor [116] einzusetzen, um den kryptographischen Schlüssel zum Entschlüsseln des Datenpakets einzusetzen; und
als Reaktion auf das Entschlüsseln des Datenpakets, den zweiten Hardware-Prozessor [116] einzusetzen, um zu bestimmen, ob das entschlüsselte Datenpaket bösartige Software enthält.

12. Verfahren nach Anspruch 11, ferner umfassend, als Reaktion auf die Bestimmung, ob das entschlüsselte Datenpaket bösartige Software umfasst, wenn das entschlüsselte Datenpaket bösartige Software umfasst, den Einsatz des zweiten Hardware-Prozessors [116], um eine Meldung, die gemäß dem Speicherübertragungsprotokoll formatiert ist, an die Speicherschnittstelle [36] zu übertragen, wobei die Meldung so konfiguriert ist, dass sie den ersten Hardware-Prozessor [16] veranlasst, die Benachrichtigungsmeldung als Sicherheitswarnung zu interpretieren.

13. Verfahren nach Anspruch 12, wobei die Meldung so konfiguriert ist, dass sie eine Hardwareunterbrechung in dem ersten Hardwareprozessor [16] auslöst.

14. Verfahren nach Anspruch 11, wobei die Mitteilung eine Adresse umfasst, die eine Stelle auf der Speichereinheit [30] anzeigt, und wobei der zweite Hardware-Prozessor [116] konfiguriert ist, um zu bestimmen, ob die Mitteilung die Pseudo-Speicherzugriffsanforderung gemäß der Adresse umfasst.

15. Verfahren nach Anspruch 14, wobei das Bestimmen, ob die Mitteilung die Pseudo-Speicherzugriffsanforderung umfasst, umfasst:
den zweiten Hardware-Prozessor [116] einzusetzen, um die Adresse mit einer vorbestimmten Adresse zu vergleichen; und
als Reaktion darauf, zu bestimmen dass die Mitteilung die PseudoSpeicherzugriffsanforderung gemäß einem Ergebnis des Vergleichs umfasst.

16. Verfahren nach Anspruch 11, wobei die Mitteilung eine Anforderung umfasst, eine Payload/Nutzdaten auf die Speichereinheit [30] zu schreiben, und wobei der zweite Hardwareprozessor [116] konfiguriert ist, um zu bestimmen, ob die Mitteilung die Pseudospeicherzugriffsanforderung gemäß der Payload/den Nutzdaten umfasst.

17. Verfahren nach Anspruch 11, ferner umfassend:
den zweiten Hardware-Prozessor [116] einzusetzen, um ein Schattendateisystem zu unterhalten, das eine Abbildung zwischen einer Vielzahl von Datenpaketen, die auf der Speichereinheit [30] gespeichert sind, und einer Vielzahl von Dateien eines primären Dateisystems umfasst, das von einem Betriebssystem [40] unterhalten wird, das auf dem ersten Hardwareprozessor [16] ausgeführt wird;
als Reaktion auf das Empfangen der echten Speicherzugriffsanforderung den zweiten Hardware-Prozessor [116] einzuseten, um eine Datei aus der Vielzahl von Dateien gemäß dem Schattendateisystem derart zu identifizieren, dass das Datenpaket einen Teil der Datei bildet; und
als Reaktion auf das Identifizieren der Datei den zweiten Hardware-Prozessor [116] einzuseten, um zu bestimmen, ob die Datei bösartige Software enthält.

18. Verfahren nach Anspruch 11, ferner umfassend:
den zweiten Hardware-Prozessor [116] einzuseten, um gemäß dem Schattendateisystem zu bestimmen, ob eine andere vom ersten HardwareProzessor [16] über die Speicherschnittstelle empfangene Mitteilung eine Erzeugung einer neuen Datei anzeigt; und
als Reaktion darauf, wenn die andere Mitteilung die Erstellung der neuen Datei anzeigt, den zweiten Hardware-Prozessor [116] einzusetzen, das Schattendateisystem zu aktualisieren, um die Erstellung der neuen Datei anzuzeigen.

19. Verfahren nach Anspruch 11, das ferner umfasst, dass als Reaktion auf die Entschlüsselung des Datenpakets der zweite Hardwareprozessor [116] eingesetzt wird, um das entschlüsselte Datenpaket auf die Speichereinheit [30] zu schreiben.

20. Verfahren nach Anspruch 11, wobei die Speicherschnittstelle [36] ein Element umfasst, das aus einer Gruppe ausgewählt ist, die aus einer seriellen ATA-Schnittstelle und einer universellen seriellen Busschnittstelle [USB] besteht.

## Revendications

1. Un système informatique comprenant un premier processeur matériel [16] et un dispositif de stockage sécurisé [24], le dispositif de stockage sécurisé [24] connecté au premier processeur matériel [16] via une interface de stockage [36] configurée pour recevoir un accès au stockage des requêtes formatées selon un protocole de transmission de stockage, dans lequel le dispositif de stockage sécurisé [24] comprend un deuxième processeur matériel [116] et une unité de stockage non volatile [30], et dans lequel :
le premier processeur matériel [16] est configuré pour :
en réponse à la détection d'une demande par le logiciel s'exécutant sur le premier processeur matériel [16] pour stocker un paquet de données sur l'unité de stockage [30], crypter le paquet de données,
en réponse au cryptage du paquet de données, transmettre une vraie demande d'accès au stockage à l'interface de stockage [36], la demande vraie d'accès au stockage comprenant le paquet de données crypté,
générer une demande fictif/factice d'accès au stockage selon le protocole de transmission de stockage, la demande fictif d'accès au stockage comprenant au moins une partie d'une clé cryptographique, et
transmettre la demande fictif d'accès au stockage à l'interface de stockage [36] ; et
le deuxième processeur matériel [116] est configuré pour :
en réponse à la réception d'une communication via l'interface de stockage [36], déterminer si la communication comprend la demande fictif d'accès au stockage;
en réponse, lorsque la communication comprend la demande fictif d'accès au stockage, déterminer la clé cryptographique en fonction de la demande fictif d'accès au stockage,
en réponse à la réception de la vraie demande d'accès au stockage, utiliser la clé cryptographique pour déchiffrer le paquet de données, et
déterminer si le paquet de données déchiffré comprend un logiciel malveillant.

2. Système hôte selon la revendication 1, dans lequel le deuxième processeur matériel [116] est en outre configuré, en réponse à la détermination si le paquet de données déchiffré comprend un logiciel malveillant, lorsque le paquet de données déchiffré comprend un logiciel malveillant, pour transmettre une notification formatée selon le protocole de transmission de stockage à l'interface de stockage [36], la notification étant configurée pour amener le premier processeur matériel [16] à interpréter le message de notification comme une alerte de sécurité.

3. Système hôte selon la revendication 2, dans lequel la notification est configurée pour provoquer une interruption matérielle dans le premier processeur matériel [16].

4. Système hôte selon la revendication 1, dans lequel la communication comprend une adresse indicative d'un emplacement sur l'unité de stockage [30], et dans lequel le deuxième processeur matériel [116] est configuré pour déterminer si la communication comprend la demande fictif d'accès au stockage selon l'adresse.

5. Système hôte selon la revendication 4, dans lequel la détermination si la communication comprend la demande fictif d'accès au stockage comprend :
la comparaison l'adresse à une adresse prédéterminée ; et
en réponse, la détermination que la communication comprend la demande fictif d'accès au stockage selon un résultat de la comparaison.

6. Système hôte selon la revendication 1, dans lequel la communication comprend une demande d'écriture d'une charge utile dans l'unité de stockage [30], et dans lequel le deuxième processeur matériel [116] est configuré pour déterminer si la communication comprend la demande fictif d'accès au stockage selon de la charge utile.

7. Système hôte selon la revendication 1, dans lequel le deuxième processeur matériel [116] est en outre configuré pour :
maintenir un système de fichiers fantômes/cachés comprenant un mappage entre une pluralité de paquets de données stockés sur l'unité de stockage [30] et une pluralité de fichiers d'un système de fichiers principal maintenu par un système d'exploitation [40] s'exécutant sur le premier processeur matériel [16] ;
en réponse à la réception de la vraie demande d'accès au stockage, identifier selon le système de fichiers fantômes, un fichier de la pluralité de fichiers, de sorte que le paquet de données fasse partie du fichier ; et
en réponse à l'identification du fichier, déterminer si le fichier comprend un logiciel malveillant.

8. Système hôte selon la revendication 1, dans lequel le deuxième processeur matériel [116] est en outre configuré pour :
déterminer selon le système de fichiers fantômes si une autre communication reçue du premier processeur matériel [16] via l'interface de stockage [36] indique une création d'un nouveau fichier ; et
en réponse, lorsque l'autre communication indique la création du nouveau fichier, mettre à jour le système de fichiers fantômes pour indiquer la création du nouveau fichier.

9. Système hôte selon la revendication 1, dans lequel le deuxième processeur matériel [116] est en outre configuré, en réponse au décryptage du paquet de données, pour écrire le paquet de données décrypté dans l'unité de stockage [30].

10. Système hôte selon la revendication 1, dans lequel l'interface de stockage [36] comprend un élément sélectionné dans un groupe constitué d'une interface ATA série et d'une interface de bus série universel (USB).

11. Procédé de sécurité informatique comprenant :
la connexion du dispositif de stockage sécurisé [24] à un premier processeur matériel [16] via une interface de stockage [36] configurée pour recevoir des demandes d'accès au stockage formatées selon un protocole de transmission de stockage, dans lequel le dispositif de stockage sécurisé [24] comprend un deuxième processeur matériel [116] et une unité de stockage non volatile [30] ;
en réponse à la détection d'une demande par le logiciel s'exécutant sur le premier processeur matériel [16] pour stocker un paquet de données sur l'unité de stockage [30], l'utilisation du premier processeur matériel [16] pour crypter le paquet de données ;
en réponse au cryptage du paquet de données, l'utilisation du premier processeur matériel [16] pour transmettre une vraie demande d'accès au stockage à l'interface de stockage [36], la vraie demande d'accès au stockage comprenant le paquet de données crypté;
l'utilisation du premier processeur matériel [16] pour générer une demande fictif/factice d'accès au stockage selon le protocole de transmission de stockage, la demande fictif d'accès au stockage comprenant au moins une partie d'une clé cryptographique;
l'utilisation du premier processeur matériel [16] pour transmettre la demande fictif d'accès au stockage à l'interface de stockage [36] ;
en réponse à la réception d'une communication via l'interface de stockage [36], l'utilisation du second processeur matériel [116] pour déterminer si la communication comprend la demande fictif d'accès au stockage;
en réponse, lorsque la communication comprend la demande fictif d'accès au stockage, l'utilisation du deuxième processeur matériel [116] pour utiliser la clé cryptographique pour déchiffrer le paquet de données ; et
en réponse au décryptage du paquet de données, l'utilisation du deuxième processeur matériel [116] pour déterminer si le paquet de données décrypté comprend un logiciel malveillant.

12. Procédé selon la revendication 11, comprenant en outre, en réponse à la détermination si le paquet de données déchiffré comprend un logiciel malveillant, lorsque le paquet de données déchiffré comprend un logiciel malveillant, l'utilisation du deuxième processeur matériel [116] pour transmettre une notification formatée selon le protocole de transmission de stockage à l'interface de stockage [36], la notification étant configurée pour amener le premier processeur matériel [16] à interpréter le message de notification comme une alerte de sécurité.

13. Procédé selon la revendication 12, dans lequel la notification est configurée pour provoquer une interruption matérielle dans le premier processeur matériel [16].

14. Procédé selon la revendication 11, dans lequel la communication comprend une adresse indicative d'un emplacement sur l'unité de stockage [30], et dans lequel le deuxième processeur matériel [116] est configuré pour déterminer si la communication comprend la demande fictif d'accès au stockage selon l'adresse.

15. Procédé selon la revendication 14, dans lequel la détermination si la communication comprend la demande d'accès au stockage fictif comprend :
l'utilisation du second processeur matériel [116] pour comparer l'adresse à une adresse prédéterminée; et
en réponse, la détermination que la communication comprend la demande d'accès au stockage fictif selon un résultat de la comparaison.

16. Procédé selon la revendication 11, dans lequel la communication comprend une demande d'écriture d'une charge utile dans l'unité de stockage [30], et dans lequel le deuxième processeur matériel [116] est configuré pour déterminer si la communication comprend la demande d'accès au stockage factice selon de la charge utile.

17. Procédé selon la revendication 11, comprenant en outre :
l'utilisation du second processeur matériel [116] pour maintenir un système de fichiers fantômes/cachés comprenant un mappage entre une pluralité de paquets de données stockés sur l'unité de stockage [30] et une pluralité de fichiers d'un système de fichiers principal maintenu par un système d'exploitation [40] exécutant sur le premier processeur matériel [16] ;
en réponse à la réception de la vraie demande d'accès au stockage, l'utilisation du second processeur matériel [116] pour identifier selon le système de fichiers fantômes, un fichier de la pluralité de fichiers, de sorte que le paquet de données fasse partie du fichier ; et
en réponse à l'identification du fichier, l'utilisation du second processeur matériel [116] pour déterminer si le fichier comprend un logiciel malveillant.

18. Procédé selon la revendication 11, comprenant en outre :
l'utilisation du deuxième processeur matériel [116] pour déterminer selon le système de fichiers fantômes si une autre communication reçue du premier processeur matériel [16] via l'interface de stockage indique une création d'un nouveau fichier ; et
en réponse, lorsque l'autre communication indique la création du nouveau fichier, l'utilisation du deuxième processeur matériel [116] pour mettre à jour le système de fichiers cachés pour indiquer la création du nouveau fichier.

19. Procédé selon la revendication 11, comprenant en outre, en réponse au décryptage du paquet de données, l'utilisation du deuxième processeur matériel [116] pour écrire le paquet de données décrypté dans l'unité de stockage [30].

20. Procédé selon la revendication 11, dans lequel l'interface de stockage [36] comprend un élément choisi dans un groupe constitué d'une interface série ATA et d'une interface de bus série universel (USB).
